# EUROPÄISCHE PATENTANMELDUNG

(11) **EP 3 156 147 A1**
(43) Veröffentlichungstag der Anmeldung: **19.04.2017**
(21) Anmeldenummer: 16001842.0
(22) Anmeldetag: 23.08.2016
(51) Int. Cl.: B21F 15/04, B23K 20/02, B23K 20/233, H01R 4/02, B23K 11/02

(54) **VERFAHREN ZUM HERSTELLEN EINER HÜLSENLOSEN VORGEFERTIGTEN DRAHTVERBINDUNG FÜR DEN TRANSFORMATORENBAU UND HÜLSENLOSE DRAHTVERBINDUNG**

(30) Priorität: 15.10.2015 DE 102015013288
(71) Anmelder: SGB Sächsisch-Bayerische Starkstrom- Gerätebau GmbH, 08496 Neumark/Sachsen (DE)
(72) Erfinder: Tiepner, Frank, 08496 Neumark (DE); Schmidt, Uwe, 08527 Plauen (DE)
(74) Vertreter: Auerbach, Bettina

(57) **Zusammenfassung**

Die Erfindung betrifft ein Verfahren zum Herstellen einer hülsenlosen vorgefertigten Drahtverbindung sowie die hülsenlose Drahtverbindung selbst. Sie dient der Verschaltung von Spannungsschaltern und Wicklungsanzapfungen im Transformatorenbau, wobei die zu verbindenden Drahtabschnitte unterschiedliche Materialarten aufweisen. Dabei wird die Materialstärke der zu verbindende Metalldrahtabschnitte in Bezug auf die zu übertragende Stromstärke zueinander abgestimmt und zur Vermeidung einer unzulässig dicken Oxidschicht werden die Metalldrahtabschnitte zeitnah vor dem Zusammenfügen auf Länge geschnitten. Die Drahtabschnitte an den beiden Verbindungsenden werden bis zum Erreichen der Prozesstemperatur mittels Strombeaufschlagung erhitzt werden und dabei unmittelbar anschließend mittels Druckausübung bis zum Erreichen einer intermetallischen Kontaktstelle stumpf zusammengepresst. An der Kontaktstelle der Fügepartner wird ein Eutektikum zwischen den Grundwerkstoffen und einer intermetallischen Verbindung beider Werkstoffe erreicht, wobei die Grundwerkstoffe nicht schmelzen. Anschließend wird die intermetallische Kontaktstelle unter Ausbildung einer festen Verbindung zwischen den beiden Drahtenden abgekühlt.

## Beschreibung

Die Erfindung betrifft ein Verfahren zum Herstellen einer hülsenlosen vorgefertigten Drahtverbindung vornehmlich für den Spannungsumschalter im Transformatorenbau. Dabei ist es von besonderem Vorteil, wenn die Verbindungsstellen von Drähten aus unterschiedlichen Materialien vorgefertigt sind, so dass bei der Fertigung nur die unkomplizierte Verbindung von Drahtenden gleicher Materialien durchgeführt werden muss. Die Erfindung beinhaltet weiterhin die mit dem Verfahren hergestellte hülsenlose Drahtverbindung selbst.

Derzeit werden vorgefertigte Drahtverbindungen durch eine Verbindungspresshülse miteinander verbunden. Die beiden Drahtenden werden beidseitig jeweils in das offene Ende der Presshülse eingebracht und durch Zusammenpressen der Hülse miteinander fest verbunden. Der Nachteil dieser Lösung besteht darin, dass die Enden in der Hülse nicht immer genau zusammenstoßen und dadurch eine Störung des elektromagnetischen Feldes bei Spannungsübertragungen außreten, welche den Stromfluss nicht beeinflussbar beeinflussen. Auch die Hülse selbst nimmt die elektrische Spannung beim Leiten von Strom auf und beeinflusst den gewünschten ungehinderten Stromfluss. Außerdem benötigen diese Presshülsen einen deutlich spürbaren Bauraum im Transformaterengehäuse.

Beim Transformatorenbau ist es von immenser Bedeutung, dass die zu realisierenden Stromflüsse definierbar geregelt werden können und undefinierbare Störungen vermieden werden müssen.

Es ist deshalb Aufgabe der Erfindung, eine Vorrichtung zu schaffen, mit deren Hilfe ein effektiver und definierter Stromfluss an der Übergangsstelle von Drahtverbindungen aus unterschiedlichen Materialien stattfinden kann, sowie ein effektives kostengünstiges Verfahren zu deren Herstellung.

Erfindungsgemäß wird die Aufgabe durch die Merkmale der Ansprüche 1 und 2 gelöst, wobei die vorteilhaften Ausgestaltungen in den Unteransprüchen beschrieben sind.

Danach wird beim Verfahren zum Herstellen einer hülsenlosen vorgefertigten Drahtverbindung für den Spannungsschalter im Transformatorenbau, bei der die zu verbindenden Drahtabschnitte unterschiedliche Materialarten aufweisen zunächst die Materialstärke der zu verbindende Drahtabschnitte in Bezug auf den zu erreichenden Widerstandswert zueinander abgestimmt und ausgewählt. Anschließend werden zur Vermeidung einer Oxidschicht die Drahtabschnitte zeitnah vor dem Zusammenfügen auf Länge geschnitten und in einer Spannvorrichtung eingespannt. Beim Einspannen werden die zu verbindenden Drahtabschnittenden für ca. die 3-fache Länge des später erreichten Verbindungsbereiches frei gelassen.

Die Drahtabschnitte werden anschließend an den beiden freigelassenen Verbindungsenden bis zum Erreichen ihres jeweiligen Eutektikums mittels Strombeaufschlagung erhitzt und dabei gleichzeitig mittels Druckausübung bis zum Erreichen einer intermetallischen Kontaktstelle stumpf zusammengepresst. Bei diesem Zusammenpressen der im Eutektikum befindlichen Materialien erfolgt eine intermetallische Verbindung der beiden Metalle und somit die Bildung einer intermetallischen Kontaktstelle zwischen den beiden Metalldrahtenden, welche anschließend zur Ausbildung einer festen Verbindung zwischen den beiden Drahtenden abgekühlt wird.

Die Materialien werden im eutektischen Zustand ineinander verschoben und bilden eine gemeinsame Kristallstruktur aus. Im Transformatorenbau werden überwiegend Aluminium-/Kupferverbindungen benötigt, so dass im Ergebnis dieses Verfahrens an der Verbindungsstelle eine intermediäre Kristallisation von AL₂CU entsteht, welche sich durch einen hohen Härtegrad und Sprödigkeit auszeichnen. Diese Eigenschaften wirken sich positiv beim Stromflussverhalten aus, was im Transformatorenbau zu einer Verbesserung der Effizienz führt.

Der Vorteil einer solchen intermetallischen Verbindungsstelle besteht zum einem in einem innigen Kontakt zwischen den beiden Metalldrahtabschnitten, einer sehr guten ungestörten und definierbaren elektrische Leitfähigkeit.

Die mit diesem Verfahren hergestellte hülsenlose vorgefertigte Drahtverbindung für den Spannungsschalter, besteht aus zwei Metalldrahtabschnitten unterschiedlicher Materialarten, welche miteinander an jeweils einem Ende miteinander verbunden sind. Der Verbund weist einen Verbindungsbereich mit einer intermetallischen Kontaktstelle auf. Diese intermetallische Kontaktstelle wurde ohne zusätzliche Hülse gefertigt und weist durch Erwärmen der beiden zu verbindenden Drahtenden bis zu Erreichen ihres Eutektikums und durch zusätzliches strumpfes Zusammendrücken der Drahtenden innerhalb eines Verbindungsbereiches mit anschließender Kühlung eine Schmelzdiffusions-Verbindungsstelle als intermetallische Kontaktstelle auf

Um einen annähernd gleichen Widerstandswert der beiden Drahtabschnitte zu gewährleisten hat es sich als vorteilhaft herausgestellt, die Drahtdurchmesser der zu verbindenden Drahtenden in Bezug auf die Widerstanddifferenz der zu verbindenden Materialarten anzupassen und auszuwählen.

Der intermetallische Verbindungsbereich sollte vorteilhafter Weise nicht länger sein als der größte Drahtdurchmesser der beiden zu verbindenden Drahtenden sein. Dieser kann durch die ausgeübte Druckkraft beim Zusammendrücken der Drahtenden beeinflusst werden.

Die Erfindung soll nachstehend an einem Ausführungsbeispiel näher erläutert werden.

### Ausführungsbeispiel :

Für den Einsatz im Transformatorenbau und dort für den Kontakt zwischen Oberspannungsschalter und Transformatorenspulen soll eine vorgefertigte hülsenlose Drahtverbindung bereit gestellt werden, um die beiden zu verbindenden Drahtenden der Aluminiumspulen und der Kupferanschlüsse des Oberspannungsschalters normal als Aluminium/Aluminium-Verbindung und Kupfer/Kupferverbindung während der Fertigung und Montage der Transformatoren zeitsparend verbinden zu können.

Dafür wird eine hülsenlose Drahtverbindung von Aluminiumdrahtabschnitten und Kupferdrahtabschnitten vorgefertigt und bereitgestellt Die Materialstärke der zu verbindende Metalldrahtabschnitte ist in Bezug auf den zu erreichenden Widerstandswert innerhalb des Verbindungsabschnittes zueinander abgestimmt und ausgewählt. Danach besteht die in diesem Ausführungsbeispiel beschriebene Drahtverbindung aus einem 3,0 mm starken Kupferdrahtabschnitt und einem 5,0 mm starken Aluminiumdrahtabschnitt. Zur Verringerung der störenden Oxidschichten werden die Drahtabschnitte erst kurz vor dem Zusammenfügen beim Kontaktreaktionslöten zeitnah auf die gewünschte handliche Länge von je 15 cm Länge zugeschnitten. Nach dem Einspannen in eine Spannvorrichtung unter Freihaltung der zu verbindenden jeweiligen Drahtenden, wobei die freiliegenden Drahtenden sich genau gegenüber liegen, werden die Drahtabschnitte an den beiden Verbindungsenden bis zum Erreichen ihres jeweiligen Eutektikums mittels Strombeaufschlagung auf 700 °C erhitzt. Die Materialien werden unterschiedlich zähflüssig und treten in eine eutektische Phase, wodurch die beiden Materialen mittels Druckausübung ineinander geschoben werden können. Dabei bildet sich beim stumpfen Zusammenpressen der beiden Drahtenden je nach Größe der gleichzeitigen Druckausübung eine intermetallische Kontaktstelle. Die Materialien vermischen sich in diesem Bereich und bilden dabei auf Grund der eutektischen Phasen beider Materialien eine gemeinsame eigene neue kristalline Struktur aus.

Anschließend wird die intermetallische Kontaktstelle unter Ausbildung einer 0-Phase als feste Verbindung zwischen den beiden Drahtenden abgekühlt.

Die entstandene intermetallische Verbindungsstelle ist dabei nicht länger als 5,0 mm. Da sich einen eigene kristalline Struktur beim Kontaktieren von zwei sich im Eutektikum befindlichen Metallen ausbildet, ohne dabei von Oxidzusätze beeinflusst zu werden, bildet sich eine stabile zugfeste Verbindung zwischen den Drahtabschnitten aus Aluminium und aus Kupfer aus. Der Einsatz der vorgefertigten hülsenlosen Drahtverbindungen beim Transformatorenbau und dort bei der Verbindung von Aluminiumspulen mit Spannungsschaltern, welche vornehmlich Kupferanschlüsse aufweisen, bringt eine hohe Zeitersparnis bei der Fertigungsmontage der Transformatoren mit sich, da auf zeitaufwendige konventionelle Verbindungsprozeduren zwischen Kupfer- und Alumimumdrähten verzichtet werden kann und spart Bauraum und somit Material. Die Kosten für die Herstellung der vorgefertigten Drahtverbindungen nach dem erfindungsgemäßen Verfahren sind auch geringer als der Zukauf von Drahtverbindungen mit Hülsentechnik, wobei die vorteilhaften Gütefaktoren der elektromagnetischen Feldspannung vorzugsweise hinzukommen.

## Patentansprüche

1. Verfahren zum Herstellen einer hülsenlosen vorgefertigten Drahtverbindung für die Verschaltung von Spannungsschaltern und Wicklungsanzapfungen im Transformatorenbau, wobei die zu verbindenden Drahtabschnitte unterschiedliche Materialarten aufweisen, **dadurch gekennzeichnet,**
**dass** die Materialstärke der zu verbindende Metalldrahtabschnitte in Bezug auf die zu übertragende Stromstärke zueinander abgestimmt und ausgewählt wird,
**dass** zur Vermeidung einer unzulässig dicken Oxidschicht die Metalldrahtabschnitte zeitnah vor dem Zusammenfügen auf Länge geschnitten werden,
**dass** die Drahtabschnitte an den beiden Verbindungsenden bis zum Erreichen der Prozesstemperatur mittels Strombeaufschlagung erhitzt werden und dabei unmittelbar anschließend mittels Druckausübung bis zum Erreichen einer intermetallischen Kontaktstelle stumpf zusammengepresst werden,
**dass** an der Kontaktstelle der Fügepartner ein Eutektikum zwischen den Grundwerkstoffen und einer intermetallischen Verbindung beider Werkstoffe erreicht wird, wobei die Grundwerkstoffe nicht schmelzen, **dass** die intermetallische Kontaktstelle anschließend unter Ausbildung einer festen Verbindung zwischen den beiden Drahtenden abgekühlt wird.

2. Hülsenlose vorgefertigte Drahtverbindung für die Verschaltung von Spannungsschaltern und Wicklungsanzapfungen im Transformatorenbau, wobei die zu verbindenden Drahtabschnitte unterschiedliche Materialarten aufweisen, **dadurch gekennzeichnet, dass** die hülsenlose Drahtverbindung eine durch Erwärmen der beiden zu verbindenden Drahtenden bis zu Erreichen ihres Eutektikums und durch zusätzliches stumpfes Zusammendrücken der Drahtenden innerhalb eines Verbindungsbereiches mit anschließender Kühlung eine Schmelzdiffusions-Verbindungsstelle aufweist

3. Hülsenlose vorgefertigte Drahtverbindung nach dem Anspruch 2,
**dadurch gekennzeichnet, dass** der Verbindungsbereich eine intermetallische Verbindung aufweist.

4. Hülsenlose vorgefertigte Drahtverbindung nach einem der Ansprüche 2 und 3, **dadurch gekennzeichnet, dass** durch gezielte Anordnung der Fügeteile eine Vergrößerung der Kontaktoberfläche erreicht wird, wodurch die Festigkeit der Fügestelle das Niveau der Grundwerkstoffe erreicht.

5. Hülsenlose vorgefertigte Drahtverbindung nach einem der Ansprüche 2 bis 4, **dadurch gekennzeichnet, dass** die Drahtdurchmesser der zu verbindenden Drahtenden in Bezug auf die jeweiligen spezifischen Widerstände der zu verbindenden Materialarten zum Erreichen eines annähernd gleichen Widerstandwerts angepasst ausgewählt sind.

6. Hülsenlose vorgefertigte Drahtverbindung nach einem der Ansprüche 2 bis 5, **dadurch gekennzeichnet, dass** der intermetallische Verbindungsbereich nicht länger ist als der größte Drahtdurchmesser der beiden zu verbindenden Drahtenden.

7. Hülsenlose vorgefertigte Drahtverbindung nach einem der Ansprüche 2 bis **6 dadurch gekennzeichnet, dass** die zu verbindenden Drahtabschnitte aus Aluminium und Kupfer sind.
